# EUROPEAN PATENT APPLICATION

(11) **EP 3 534 029 A1**
(43) Date of publication of application: **04.09.2019**
(21) Application number: 19152716.7
(22) Date of filing: 21.01.2019
(51) Int. Cl.: F16D 65/00

(54) **BRAKE ASSEMBLY HAVING A BRIDGE**

(30) Priority: 02.03.2018 US 201815910074
(71) Applicant: ArvinMeritor Technology, LLC, Troy, MI 48084 (US)
(72) Inventor: PHILPOTT, Daniel, Goodrich, MI 48438 (US)
(74) Representative: Jones, John Bryn

(57) **Abstract**

A brake assembly having a housing and a bridge (52). The bridge may have a first arm (70) and a second arm (72). The first arm may have first inner and outer mounting bosses (80, 82) that may be spaced apart and may be coupled to the housing. The second arm may have second inner and outer mounting bosses (80', 82') that may be spaced apart from each other and may be coupled to the housing.

## Description

### TECHNICAL FIELD

This disclosure relates to a brake assembly that has a bridge.

### BACKGROUND

A brake assembly having a bridge that lacks through holes near a retainer bracket mounting feature is disclosed in United States Patent No. 8,857,575.

### SUMMARY

In at least one embodiment, a brake assembly is provided. The brake assembly may include a housing and a bridge. The housing and the bridge may cooperate to define an opening for receiving a brake pad assembly. The bridge may include a first arm and a second arm. The first arm may have a first inner mounting boss and a first outer mounting boss. The first inner mounting boss and the first outer mounting boss may be spaced apart from each other and may be coupled to the housing. The second arm may be spaced apart from the first arm. The second arm may have a second inner mounting boss and a second outer mounting boss. The second inner mounting boss and the second outer mounting boss may be spaced apart from each other and may be coupled to the housing.

The bridge may also include a connecting arm that may extend from the first arm to the second arm. The connecting arm may be spaced apart from the housing and may define a first through hole and a second through hole. The first through hole and the second through hole may be spaced apart from the opening.

### BRIEF DESCRIPTION OF THE DRAWINGS

Figure 1 is a perspective view of a brake assembly.
Figure 2 is a perspective view of a portion of the brake assembly showing a bridge fastened to a housing.
Figure 3 is a perspective view of the bridge.
Figure 4 is a top view of the bridge.
Figure 5 is a rear view of the bridge.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

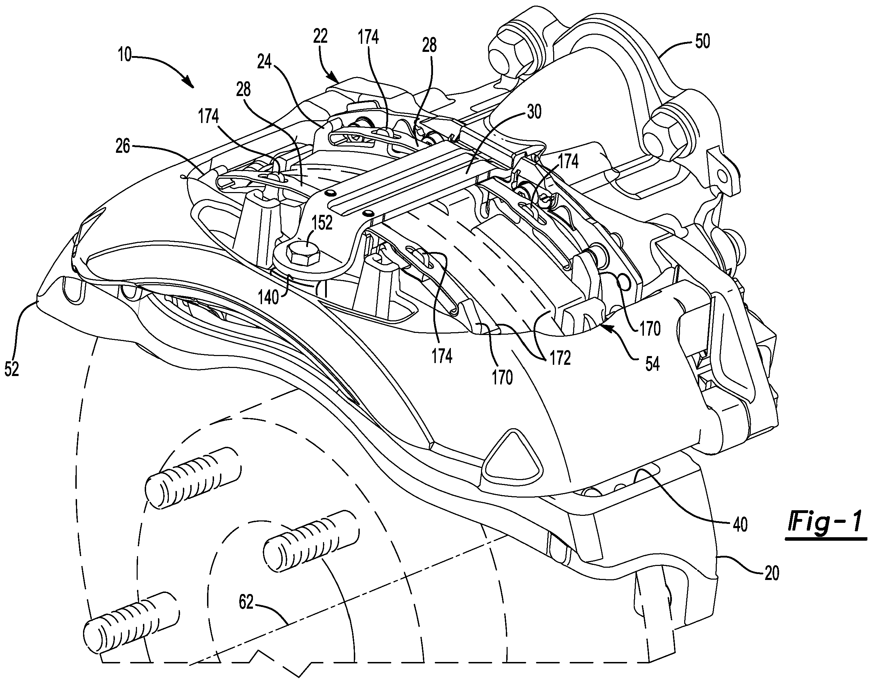

Referring to Figure 1, a brake assembly 10 is shown. The brake assembly 10 may be provided with a vehicle, such as a motor vehicle like a truck, bus, farm equipment, military transport or weaponry vehicle, or cargo loading equipment for land, air, or marine vessels. In at least one embodiment, the brake assembly 10 may include a brake carrier 20, a housing assembly 22, a first brake pad assembly 24, a second brake pad assembly 26, and at least one brake pad spring 28, and a retainer bracket 30.

The brake carrier 20 may be configured to be fixedly mounted to the vehicle. For example, the brake carrier 20 may be mounted to an axle assembly or a steering knuckle, such as with an intermediate component like a torque plate in one or more embodiments. The brake carrier 20 may receive and may support the first brake pad assembly 24 and the second brake pad assembly 26 and may include a rotor opening 40 that may be configured to receive a rotor, also known as a brake disc. As such, the brake carrier 20 may straddle the rotor and help position the first brake pad assembly 24 and the second brake pad assembly 26 on opposite sides of the rotor.

The housing assembly 22 may receive various components of the brake assembly 10. In addition, the housing assembly 22 may facilitate positioning of the first brake pad assembly 24 and the second brake pad assembly 26 with respect to the rotor to facilitate braking of the vehicle. In at least one embodiment, the housing assembly 22 may include a housing 50 and a bridge 52. The housing 50 and the bridge 52 may cooperate to define an opening 54. The opening 54 may receive the first brake pad assembly 24, second brake pad assembly 26, brake pad springs 28, in a portion of the rotor.

The housing 50 may be moveably disposed on the brake carrier 20. For example, the housing 50 may be slidably disposed on a pair of guide pins that may be fixedly disposed on the brake carrier 20. The housing 50 may be associated with or may receive at least one actuator that may actuate the first brake pad assembly 24 and the second brake pad assembly 26 into engagement with the rotor. For example, the actuator may actuate the first brake pad assembly 24 into engagement with the rotor and then move the housing 50 and bridge 52 to actuate the second brake pad assembly 26 toward the rotor. The actuator may have any suitable configuration. For instance, the actuator may include a piston assembly that may be pneumatically, hydraulically, mechanically, electrically, or electromechanically actuated in one or more embodiments. The piston assembly may move along an axis toward or away from the rotor such that the piston assembly may exert force against a back side of the first brake pad assembly 24.

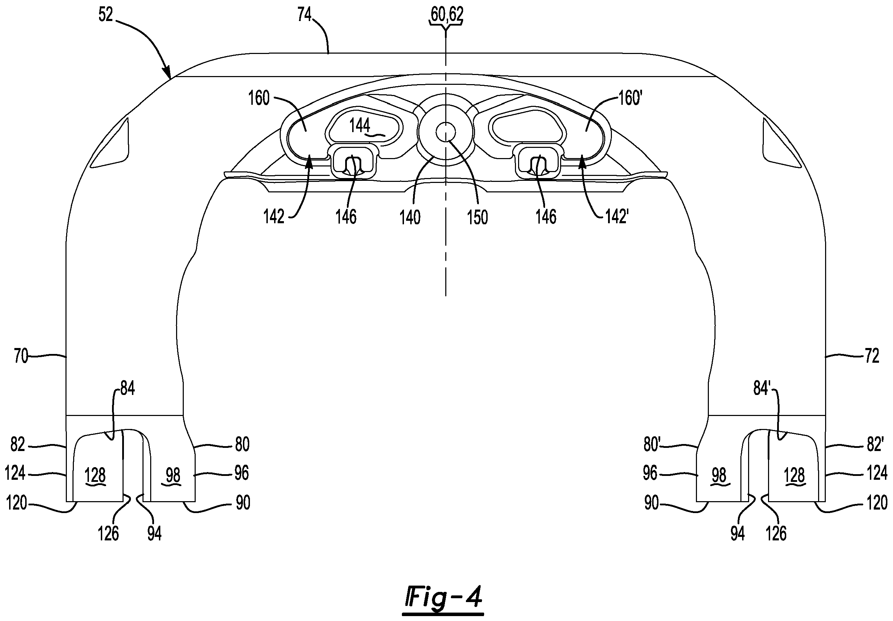

Referring to Figures 1-4, the bridge 52 may be fixedly positioned on the housing 50. As such, the bridge 52 may move with the housing 50 with respect to the brake carrier 20 when the brake assembly 10 is actuated. The bridge 52 may be spaced apart from the brake carrier 20 and may be disposed above the brake carrier 20 from the perspective shown in Figure 1. In addition, the bridge 52 may have mirror symmetry with respect to a center plane 60, which is best shown in Figure 4. The center plane 60 that may bisect the housing 50 and the bridge 52. In addition, the center plane 60 may intersect and axis of rotation 62 of the rotor, which is best shown in Figure 1, such that the axis of rotation 62 is completely disposed in the center plane 60. In at least one configuration, the bridge 52 may include a first arm 70, a second arm 72, and a connecting arm 74.

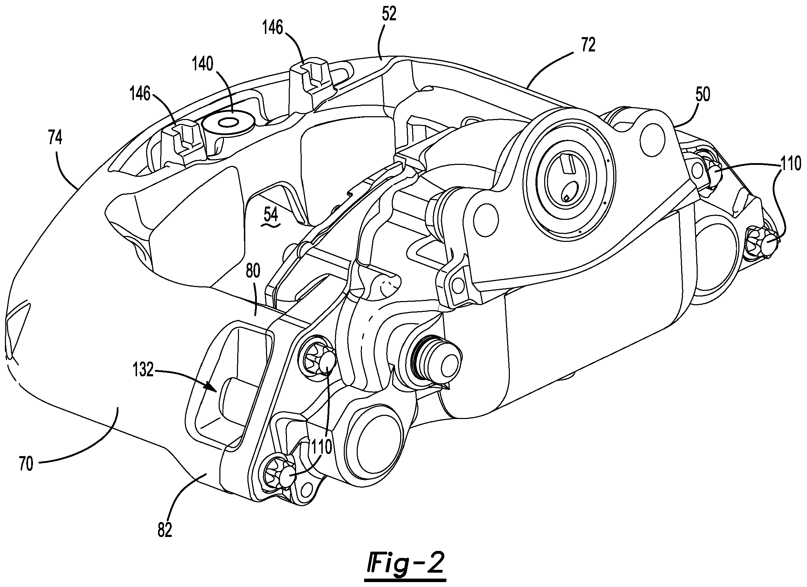

Referring to Figure 2, the first arm 70 may extend from the housing 50 to the connecting arm 74. For example, the first arm 70 may be disposed substantially perpendicular to the housing 50 and may be spaced apart from the center plane 60 as is best shown in Figure 4. In at least one configuration, the first arm 70 may include a first inner mounting boss 80, a first outer mounting boss 82, and a first connecting surface 84.

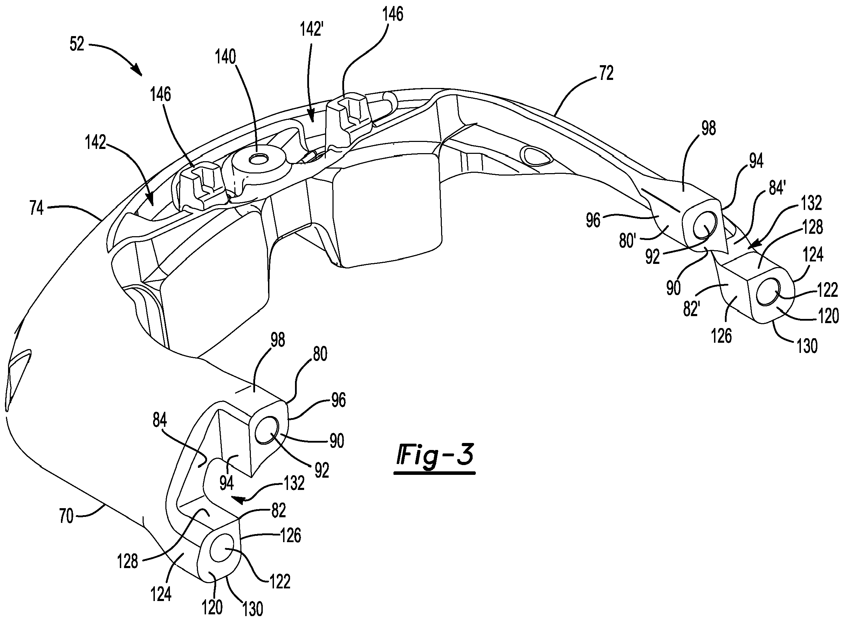

Referring to Figures 3 and 4, the first inner mounting boss 80 may facilitate mounting of the first arm 70 to the housing 50. The first inner mounting boss 80 may extend generally parallel to the center plane 60 and may include an end surface 90, a hole 92, an outboard surface 94, an inboard surface 96, an upper surface 98, and a lower surface 100.

The end surface 90 may be disposed at an end of the first inner mounting boss 80. The end surface 90 may face toward and may engage or contact the housing 50. Moreover, the end surface 90 may be the only surface of the first inner mounting boss 80 that engages or contacts the housing 50. The end surface 90 may be substantially planar in one or more embodiments.

The hole 92 may extend from the end surface 90 in a direction that extends toward the connecting arm 74. The hole 92 may receive a fastener, such as a bolt 110 as is best shown in Figure 2, that may couple the bridge 52 to the housing 50. In at least one configuration, the hole 92 may be a threaded blind hole.

The outboard surface 94 may face away from the opening 54. In addition, the outboard surface 94 may extend from the first connecting surface 84 to the end surface 90.

The inboard surface 96 may be disposed opposite the outboard surface 94. As such, the inboard surface 96 may face toward the opening 54. The inboard surface 96 may extend from the end surface 90 and may at least partially define part of the opening 54.

The upper surface 98 may face away from the brake carrier 20. In addition, the upper surface 98 may extend from the outboard surface 94 to the inboard surface 96 and may be spaced apart from the first connecting surface 84.

The lower surface 100 may be disposed opposite the upper surface 98. As such, the lower surface 100 may face toward the brake carrier 20. The lower surface 100 may extend from the outboard surface 94 to the inboard surface 96 and may be spaced apart from the first connecting surface 84.

The first outer mounting boss 82 may also facilitate mounting of the first arm 70 to the housing 50. The first outer mounting boss 82 may be completely spaced apart from the first inner mounting boss 80. The first outer mounting boss 82 may be disposed further from the center plane 60 than the first inner mounting boss 80. In addition, the first outer mounting boss 82 may be disposed closer to the brake carrier 20 than the first inner mounting boss 80. The first outer mounting boss 82 may extend generally parallel to the center plane 60 and may include similar features as the first inner mounting boss 80. These features may include an end surface 120, a hole 122, an outboard surface 124, an inboard surface 126, an upper surface 128, and a lower surface 130.

The end surface 120 may be disposed at an end of the first outer mounting boss 82. The end surface 120 may face toward and may engage or contact the housing 50. Moreover, the end surface 120 may be the only surface of the first outer mounting boss 82 that engages or contacts the housing 50. The end surface 120 may be substantially planar and may be coplanar with the end surface 90 of the first inner mounting boss 80 in one or more embodiments.

The hole 122 may extend from the end surface 120 in a direction that extends toward the connecting arm 74. The hole 122 may receive a fastener, such as a bolt 110 as is best shown in Figure 2, that may couple the bridge 52 to the housing 50. In at least one configuration, the hole 122 may be a threaded blind hole.

The outboard surface 124 may face away from the opening 54. In addition, the outboard surface 124 may extend from the end surface 120.

The inboard surface 126 may be disposed opposite the outboard surface 124. As such, the inboard surface 126 may face toward the opening 54. The inboard surface 126 may extend from the end surface 120 and may at least partially define part of the opening 54.

The upper surface 128 may face away from the brake carrier 20. The upper surface 128 may extend from the first connecting surface 84 to the end surface 120. In addition, the upper surface 128 may extend from the outboard surface 124 to the inboard surface 126. The upper surface 128 may also be disposed below the lower surface 100 of the first inner mounting boss 80.

The lower surface 130 may be disposed opposite the upper surface 128. As such, the lower surface 100 may face toward the brake carrier 20. The lower surface 130 may extend from the outboard surface 124 to the inboard surface 126 and may be spaced apart from the first connecting surface 84.

The first connecting surface 84 may extend from the first inner mounting boss 80 to the first outer mounting boss 82. The first connecting surface 84 may face toward the housing 50 and may be spaced apart from the housing 50. As such, a void or gap 132 may be provided between the first connecting surface 84 and the housing 50 and between the first inner mounting boss 80 and the first outer mounting boss 82 as is best shown with reference to Figure 2. Providing such a gap may help reduce the weight of the bridge 52, thereby reducing the weight of the brake assembly 10, which in turn may help improve vehicle fuel economy. In addition, the gap 132 and separation of inner and outer mounting bosses may facilitate drainage and may enhance airflow to components of the brake assembly 10, which may help heat escape or dissipate from the brake assembly. Moreover, the gap may be a feature that is formed in the bridge 52 during casting and may not undergo material removal or machining operations, thereby helping reduce manufacturing costs of the bridge 52.

The second arm 72 may be disposed opposite the first arm 70. As such, the second arm 72 may extend from the housing 50 to the connecting arm 74. The second arm 72 may be disposed substantially perpendicular to the housing and may be spaced apart from the center plane 60 and the first arm 70. The second arm 72 may have mirror symmetry with the first arm 70. As such, the second arm 72 may include the same features as the first arm 70 in a mirrored arrangement. The main features of the second arm 72 are designated with the same reference numbers as those associated with the first arm 70, but with the addition of a prime symbol ('). For further clarity, features of the first arm 70 that were prefaced with the word "first" above will be prefaced with the word "second" when used in reference to features of the second arm 72. Accordingly, the second arm 72 may include a second inner mounting boss 80', a second outer mounting boss 82', and a second connecting surface 84'.

The second inner mounting boss 80' may extend generally parallel to the center plane 60. The second inner mounting boss 80' may include an end surface 90, a hole 92, an outboard surface 94, an inboard surface 96, an upper surface 98, and a lower surface 100 as previously discussed.

The second outer mounting boss 82' may be spaced apart from the second inner mounting boss 80'. The second outer mounting boss 82' may include an end surface 120, a hole 122, an outboard surface 124, an inboard surface 126, an upper surface 128, and a lower surface 130 as previously discussed.

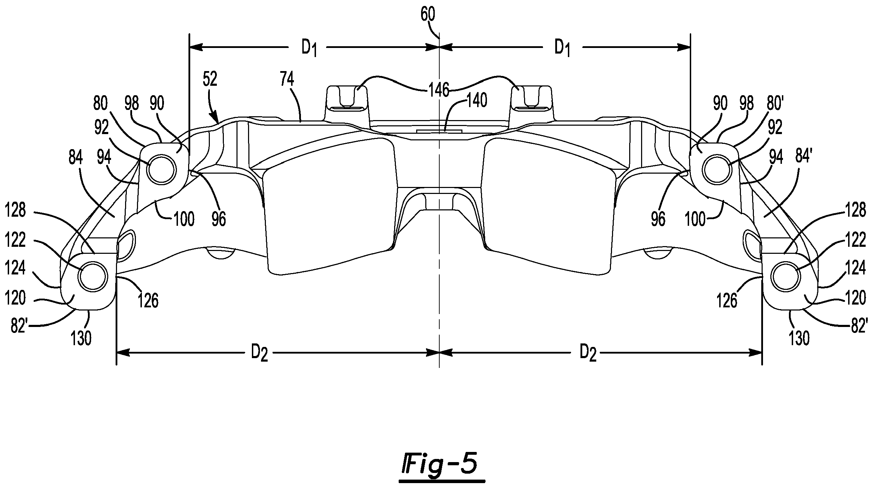

Referring to Figure 5, various positional relationships between the inner and outer mounting bosses are shown. The first inner mounting boss 80 and the second inner mounting boss 80' may be disposed at a first distance D₁ from the center plane 60. The first outer mounting boss 82 and the second outer mounting boss 82' may be disposed at a second distance D₂ from the center plane 60 that is greater than the first distance D₁. As such, the first inner mounting boss 80 and the second inner mounting boss 80' may be disposed closer to the center plane 60 than the first outer mounting boss 82 and the second outer mounting boss 82'. In addition, the first inner mounting boss 80 and the second inner mounting boss 80' may be completely disposed above the first outer mounting boss 82 and the second outer mounting boss 82'. Moreover, first inner mounting boss 80 may be disposed further from the second outer mounting boss 82' than from the second inner mounting boss 80'. Similarly, the second inner mounting boss 80' may be disposed further from the first outer mounting boss 82 than from the first inner mounting boss 80.

Referring to Figures 3 and 4, the connecting arm 74 may extend from the first arm 70 to the second arm 72. In addition, the connecting arm 74 may be spaced apart from the housing 50 and may be generally disposed parallel to the housing 50 and perpendicular to the center plane 60. In at least one configuration, the connecting arm 74 may include a connecting arm mounting boss 140, a first recess 142, a second recess 142', a first through hole 144, a second through hole 144', and at least one pad wear warning indicator mounting boss 146.

The connecting arm mounting boss 140 may facilitate mounting of the retainer bracket 30 as is best shown in Figure 1. As is best shown in Figure 4, the connecting arm mounting boss 140 may be disposed along and may be bisected by the center plane 60. The connecting arm mounting boss 140 and may have a hole 150 that may receive a fastener 152, such as a bolt, that may couple the retainer bracket 30 to the connecting arm mounting boss 140. For example, the hole 150 may be a threaded hole that may have threads that may mate with the threads of the fastener 152, which is shown in Figure 1. In at least one configuration, the connecting arm mounting boss 140 may be substantially cylindrical.

Referring to Figures 3 and 4, the first recess 142 may be spaced apart from the center plane 60 and may extend from the connecting arm mounting boss 140. The first recess 142 may extend in a downward direction from the perspective shown in Figure 3 from a top side of the connecting arm 74 toward a bottom side of the connecting arm 74 that may be disposed opposite the top side. The first recess 142 may extend from the connecting arm mounting boss 140 toward the first arm 70 and may have a first recess bottom surface 160.

The first recess bottom surface 160 may be disposed at the bottom of the first recess 142. As is best shown in Figure 4, first recess bottom surface 160 may extend partially or continuously around the first recess 142. In addition, the first recess bottom surface 160 may be disposed substantially perpendicular to the center plane 60 in one or more embodiments. The first recess bottom surface 160 may extend from the connecting arm mounting boss 140 and may extend from a pad wear warning indicator mounting boss 146.

The first through hole 144 may be spaced apart from the center plane 60 and the connecting arm mounting boss 140. The first through hole 144 may extend from the first recess bottom surface 160 in a direction that extends away from the first recess 142 to a bottom side of the connecting arm 74. The first through hole 144 may cooperate with the first recess 142 to reduce the weight of the bridge 52, thereby reducing the weight of the brake assembly 10 which may help improve fuel economy. In addition, the first through hole 144 may facilitate drainage from the first recess 142 and may enhance airflow to components of the brake assembly 10. The first through hole 144 may be a feature that is formed in the bridge 52 during casting and may not undergo material removal or machining operations, thereby helping reduce manufacturing costs.

The second recess 142' may have mirror symmetry about the center plane 60 with respect to the first recess 142. As such, the second recess 142' may be spaced apart from the center plane 60 and may extend from an opposite side of the connecting arm mounting boss 140 from the first recess 142. Like the first recess 142, the second recess 142' may extend in a downward direction from the perspective shown in Figure 3 from a top side of the connecting arm 74 toward a bottom side of the connecting arm 74 that may be disposed opposite the top side and may have a second recess bottom surface 160'.

The second recess bottom surface 160' may be disposed at the bottom of the second recess 142'. As is best shown in Figure 4, second recess bottom surface 160' may extend partially or continuously around the second recess 142'. In addition, the second recess bottom surface 160' may be disposed substantially perpendicular to the center plane 60, may extend from the connecting arm mounting boss 140 and may extend from a pad wear warning indicator mounting boss 146.

The second through hole 144' may have mirror symmetry about the center plane 60 with respect to the first through hole 144. As such, the second through hole 144' may be spaced apart from the center plane 60 and the connecting arm mounting boss 140. In addition, the second through hole 144' and the first through hole 144 may be disposed on opposite sides of the center plane 60. The second through hole 144' may extend from the second recess bottom surface 160' in a direction that extends away from the second recess 142' to a bottom side of the connecting arm 74. The second through hole 144' may cooperate with the second recess 142' to reduce the weight of the bridge 52, thereby reducing the weight of the brake assembly 10 which may help improve fuel economy. In addition, the second through hole 144' may facilitate drainage from the second recess 142' and may enhance airflow to components of the brake assembly 10. The second through hole 144' may be a feature that is formed in the bridge 52 during casting and may not undergo material removal of machining operations, thereby helping reduce manufacturing costs.

Referring to Figures 3-5, at least one pad wear warning indicator mounting boss 146 may be provided with the connecting arm 74 to facilitate mounting of a pad wear warning sensor that may be configured to detect the amount of wear of friction material of a brake pad assembly. In the configuration shown, two pad wear warning indicator mounting bosses 146 are provided. A pad wear warning indicator mounting boss 146 may protrude above the top surface of the connecting arm 74. In addition, the pad wear warning indicator mounting boss 146 may extend further away from the brake carrier 20 than the connecting arm mounting boss 140. As is best shown with reference to Figure 4, the pad wear warning indicator mounting boss 146 may extend upward from a bottom surface of a recess, such as the first recess bottom surface 160 or the second recess bottom surface 160'. In at least one configuration, the pad wear warning indicator mounting boss 146 may have a generally C-shaped configuration. In addition, the pad wear warning indicator mounting boss 146 may be configured such that it may not undergo material removal of machining operations but may be used in an as-cast condition, thereby reducing manufacturing costs.

Referring to Figure 1, the first brake pad assembly 24 and the second brake pad assembly 26 may be configured to engage opposite sides of the rotor to slow the rotation of a vehicle wheel. The first brake pad assembly 24 and the second brake pad assembly 26 may have similar or identical configurations. In at least one configuration, the first brake pad assembly 24 and the second brake pad assembly 26 may each have a backing plate 170 and a friction material 172.

The backing plate 170 may be a structural member of a brake pad assembly 24, 26. The backing plate 170 may be made of any suitable material, such as a metal or metal alloy. In at least one configuration, the backing plate 170 may include one or more tabs 174. The tabs 174 may facilitate positioning of a corresponding brake pad spring 28. For instance, the tabs 174 may extend through one or more openings in a corresponding brake pad spring 28.

The friction material 172 may be disposed on the backing plate 170. The friction material 172 may face toward the rotor and may engage the rotor during vehicle braking.

A brake pad spring 28 may be provided with the first brake pad assembly 24 and the second brake pad assembly 26. For example, a first brake pad spring 28 may be disposed between the first brake pad assembly 24 and the retainer bracket 30 or between the first brake pad assembly 24 and a pad shield that may be disposed under the retainer bracket 30. As such, the first brake pad spring 28 may extend from the first brake pad assembly 24 to the retainer bracket 30 or the pad shield. A second brake pad spring 28 may be spaced apart from the first brake pad spring 28 and may be disposed between the second brake pad assembly 26 and the retainer bracket 30 or between the retainer bracket 30 and a pad shield. As such, the second brake pad spring 28 may extend from the second brake pad assembly 26 to the retainer bracket or the pad shield. A brake pad spring 28 may exert a biasing force on a corresponding brake pad assembly that may the brake pad assembly against the brake carrier 20 to help position the brake pad assembly.

The retainer bracket 30 may help hold the first brake pad assembly 24 and the second brake pad assembly 26 in the brake carrier 20. The retainer bracket 30 may extend across the opening from the housing 50 to the bridge 52. For example, the retainer bracket 30 may have a first end that may hook onto or may be coupled to the housing 50 and a second end that may be coupled fastened to the bridge 52. The retainer bracket 30 may contact and exert force upon one or more brake pad springs 28 in one or more configurations. Alternatively, retainer bracket 30 may extend across a pad shield that may be disposed in the opening and may be located between the retainer bracket 30 and the first brake pad assembly 24 and the second brake pad assembly 26.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A brake assembly comprising:
a housing;
a bridge that cooperates with the housing to define an opening for receiving a brake pad assembly, wherein the bridge includes:
a first arm that has a first inner mounting boss and a first outer mounting boss that are spaced apart from each other and that are coupled to the housing; and
a second arm that is spaced apart from the first arm and that has a second inner mounting boss and a second outer mounting boss that are spaced apart from each other and that are coupled to the housing.

2. The brake assembly of claim 1 wherein the first inner mounting boss is disposed further from the second outer mounting boss than from the second inner mounting boss.

3. The brake assembly of any preceding claim wherein the second inner mounting boss is disposed further from the first outer mounting boss than from the first inner mounting boss.

4. The brake assembly of any preceding claim wherein the first inner mounting boss and the second inner mounting boss are disposed closer to a center plane that bisects the bridge and the opening than the first outer mounting boss and the second outer mounting boss, preferably the first inner mounting boss and the second inner mounting boss are disposed at a first distance from the center plane and the first outer mounting boss and the second outer mounting boss are disposed at a second distance from the center plane that is greater than the first distance.

5. The brake assembly of any preceding claim wherein the first arm has a first connecting surface that extends from the first inner mounting boss to the first outer mounting boss, wherein the connecting surface faces toward and is spaced apart from the housing, and/or the first inner mounting boss and the first outer mounting boss each have a hole that receives a fastener that couples the bridge to the housing.

6. The brake assembly of claim 5 wherein the first inner mounting boss and the first outer mounting boss each have an end surface that are the only surfaces of the first inner mounting boss and the second inner mounting boss that contact the housing.

7. The brake assembly of claim 5 wherein the first inner mounting boss has an outboard surface that faces away from the opening and that extends from the first connecting surface to the housing, preferably the first outer mounting boss has an upper surface that faces away from a brake carrier and extends from the first connecting surface to the housing.

8. The brake assembly of any preceding claim wherein the second arm has a second connecting surface that extends from the second inner mounting boss to the second outer mounting boss, wherein the connecting surface faces toward and is spaced apart from the housing, and/or the second inner mounting boss and the second outer mounting boss each have a hole that receives a fastener that couples the bridge to the housing.

9. The brake assembly of claim 8 wherein the second inner mounting boss and the second outer mounting boss each have an end surface that are the only surfaces of the second inner mounting boss and the second inner mounting boss that contact the housing.

10. The brake assembly of claim 8 wherein the second inner mounting boss has an outboard surface that faces away from the opening and that extends from the second connecting surface to the housing, preferably the second outer mounting boss has an upper surface that faces away from a brake carrier and extends from the second connecting surface to the housing.

11. The brake assembly of claim 1 further comprising a connecting arm that extends from the first arm to the second arm and is spaced apart from the housing, wherein the connecting arm defines a first through hole and a second through hole that are spaced apart from the opening.

12. The brake assembly of claim 11 wherein a center plane bisects the bridge and the opening and the first through hole and the second through hole are disposed on opposite sides of the center plane.

13. The brake assembly of claim 12 wherein the connecting arm has a connecting arm mounting boss that is disposed along the center plane, wherein the first through hole and the second through hole are spaced apart from the connecting arm mounting boss.

14. The brake assembly of claim 13 wherein the connecting arm has a first recess and a second recess that are disposed on opposite sides of the center plane and that extend from the connecting arm mounting boss, wherein the first through hole extends from the first recess and the second through hole extends from the second recess.

15. The brake assembly of claim 14 wherein the first recess has a first recess bottom surface that extends from the connecting arm mounting boss and that extends continuously around the first recess, and the second recess has a second recess bottom surface that extends from the connecting arm mounting boss and that extends continuously around the second recess, preferably the connecting arm includes a first pad wear warning indicator mounting boss that extends from the first recess bottom surface, and a second pad wear warning indicator mounting boss that extends from the second recess bottom surface, wherein the first pad wear warning indicator mounting boss and the second pad wear warning indicator mounting boss extend further from a brake carrier than the connecting arm mounting boss.
